(19) Europäisches Patentamt
European Patent Office
Office européen des brevets

(11) Veröffentlichungsnummer: **0 427 979 B1**

(12) # EUROPÄISCHE PATENTSCHRIFT

(45) Veröffentlichungstag der Patentschrift: **27.04.94**

(51) Int. Cl.[5]: **C08G 18/44**, C08G 18/08, C09D 175/04

(21) Anmeldenummer: **90120148.3**

(22) Anmeldetag: **20.10.90**

(54) **Wässriges Überzugsmittel und die Verwendung von in Wasser dispergierbaren Polyurethanpolyharnstoffen als Bindemittel.**

(30) Priorität: **04.11.89 DE 3936794**

(43) Veröffentlichungstag der Anmeldung: **22.05.91 Patentblatt 91/21**

(45) Bekanntmachung des Hinweises auf die Patenterteilung: **27.04.94 Patentblatt 94/17**

(84) Benannte Vertragsstaaten: **AT BE CH DE ES FR GB IT LI NL SE**

(56) Entgegenhaltungen:
**EP-A- 0 000 568**
**EP-A- 0 073 392**
**DE-A- 3 210 051**
**GB-A- 1 348 006**
**US-A- 4 719 132**

(73) Patentinhaber: **BAYER AG**

**D-51368 Leverkusen(DE)**

(72) Erfinder: **Nachtkamp, Klaus, Dr.**
**Silcherstrasse 13**
**W-4000 Düsseldorf 13(DE)**
Erfinder: **Jürgen, Mosbach, Dr.**
**Katterbachstrasse 108**
**W-5060 Bergisch-Gladbach(DE)**
Erfinder: **Noll, Klaus, Dr.**
**Morgengraben 6**
**W-5000 Köln 80(DE)**
Erfinder: **Schmitz, Hans Günter**
**Anglerstrasse 41**
**W-4130 Moers 3(DE)**
Erfinder: **Sickert, Armin**
**Schreberstrasse 9**
**W-4150 Krefeld 1(DE)**

**EP 0 427 979 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein neues wäßriges Überzugsmittel für die Erzeugung von Metallic-Basis-Lacken, welches als Bindemittel oder als wesentliche Bindemittelkomponente einen Polyurethanharnstoff mit einem bestimmten Gehalt an Carbonatgruppierungen und einem maximalen Gehalt an Urethan- und Harnstoffgruppierungen enthält, sowie die Verwendung derartiger, in Wasser dispergierbarer Polyurethanpolyharnstoffe als Bindemittel oder Bindemittelkomponente für wäßrige Metallic-Basis-Lacke.

Die Lackierung von Automobilen mit sogenannten Metallic-Lacken hat sich in den vergangenen Jahren einen immer größeren Anteil gegenüber der Lackierung in Uni-Farben erobert. Der klassische Einschichtdecklack hat deshalb immer mehr einem Zwischenschichtaufbau aus Metall-pigmentiertem Basis- und klarem Decklack Platz gemacht.

Hierbei müssen jedoch stark verdünnte Basislacke eingesetzt werden, so daß diese Lacke im Vergleich zu ihrem Anteil am Lackaufbau einen außergewöhnlich hohen Beitrag zur Gesamtlösungsmittelemission einer Lackierlinie liefern. Es ist daher seit einigen Jahren verstärkt der Trend zu Basislacken spürbar, deren Bindemittel wasserlöslich oder -dispergierbar sind. Solche Bindemittellösungen oder -dispersionen müssen zwei Einsatzgebieten gerecht werden:

- Die Erst- (Original-) Lackierung, bei der das oder die Bindemittel als Einbrennsysteme eingesetzt werden,
- die Reparatur-Lackierung, die am fertigen Fahrzeug vorgenommen wird und deshalb höchstens die Temperaturen der forcierten Trocknung (≦90 °C) erlaubt.

Es sind bereits Patentanmeldungen veröffentlicht worden, die solche Bindemittel zum Gegenstand haben. So werden in der DE-OS 32 10 051 Metallic-Basis-Lacke beschrieben, deren Bindemittel aus in Wasser dispergierbaren Polyurethanpolyharnstoffen bestehen, welche nach dem Aufbringen des Basislakkes mit Melaminformaldehydharzen oder auch blockierten Polyisocyanaten unter Hitzeeinwirkung vernetzt werden können. Ebenfalls auf diese Weise vernetzt werden können die in EP-A-256 540 beschriebenen Gemische aus Hydroxylgruppen tragenden Polymerisaten und hydrophilen Polyurethanpolyharnstoffen, die im wesentlichen mit den eben beschriebenen identisch sind und aus wäßriger Dispersion angewendet werden.

Nach der Lehre der EP-A-260 447 werden Carboxyl- und Epoxygruppen aufweisende Polykondensate, welche selbstvernetzend sind und deshalb des Zusatzes von Melaminharzen nicht bedürfen, in Abmischung mit konventionellen Polyurethandispersionen angewendet.

In der EP-A-297 576 werden Bindemittel für Metallic-Mehrschicht-Lackierungenbeschrieben, die wie die Systeme der EP-A-256 540 aus Gemischen aus Hydroxylgruppen tragenden Polymerisaten und hydrophilen Polyurethanpolyharnstoffen bestehen, wobei jedoch die Herstellung der Polymerisate durch Emulsionspolymerisation der ihnen zugrundeliegenden Monomeren in der wäßrigen Polyurethanpolyharnstoff-Dispersion als Trägermedium durchgeführt wird.

In DE-OS 35 45 618 bzw. DE-OS 36 06 513 werden Polyurethandispersionen beschrieben, deren disperse Phase aus vernetzten Polyurethanen besteht, wobei im ersten Fall die Vernetzung bereits vor der Dispergierung in Wasser herbeigeführt wird, während im zweiten Fall das Polyurethan erst nach der Überführung in eine wäßrige Dispersion durch Erhitzen vernetzt wird.

Allen diesen Polyurethanen bzw. Polyurethanpolyharnstoffen des Standes der Technik gemeinsam ist der Umstand, das die zu ihrer Herstellung verwendeten Makrodiole Polyetherpolyole oder, bevorzugt Polyesterdiole und insbesondere Polylactondiole darstellen. Die in den Vorveröffentlichungen genannten Trocknungs- bzw. Vernetzungstemperaturen reichen in der Regel von ca. 80 bis ca. 140 °C, was dem bereits oben erwähnten Umstand Rechnung trägt, das die Bindemittel zwei unterschiedlichen Einsatzgebieten gerecht werden müssen, dem Einsatz als Einbrennlack-Bindemittel für die Rohkarosserie (Einbrenntemperaturen ca. 140 °C), sowie dem Einsatz als Bindemittel für einen Reparaturlack, der beispielsweise zur Nachlackierung einzelner Fehlstellen am bereits fertig montierten Fahrzeug eingesetzt wird, und der bei ca. 80 °C ausgehärtet wird. Sowohl aus Gründen der Rationalisierung der Fertigung wie auch der Notwendigkeit, absolute Farb- und Effekt-Gleichheit zu erreichen, muß hierbei die bereits bei der Einbrennlackierung verwendete Lackformulierung eingesetzt werden können. Es versteht sich von selbst, das die wichtigsten lacktechnischen Eigenschaften, wie z.B. Haftung und Witterungsbeständigkeit auch bei der Nachlackierung erreicht werden müssen.

Eine besonders wichtige lacktechnische Eigenschaft ist die Schwitzwasserbeständigkeit. Zur Ermittlung dieser Eigenschaft wird nach DIN 50 017 in einer Klimakammer ein lackierter Prüfkörper kondensierendem Dampf von ca. 40 °C ausgesetzt. Nach einer vorgegebenen Zeit wird der Prüfkörper auf Blasenbildung überprüft, welche auf Verlust der Haftung am Untergrund unter dem Einfluß in den Lackfilm eindringender Feuchtigkeit schließen läßt. Auch die Brillanz (oder "distinction of image" [DOI]) wird nach diesem Test

bestimmt und sollte sich natürlich nicht nennenswert verschlechtert haben. Es ist ohne weiteres einsehbar, das gerade Lackfilme, die bei der Trocknung nur niedrigen Härtungstemperaturen unterworfen worden sind, Mühe haben, diesen Test zu bestehen, zumal wenn sie aus wäßrigen Dispersionen entstanden sind. So passieren die auf dem Markt befindlichen Polyurethane aus wäßriger Phase diesen Test in der Regel mit mäßigem Ergebnis, teilweise versagen sie hier völlig.

Eine weitere, für den Einsatz bei der Reparaturlackierung unabdingbare Forderung ist eine einwandfreie Haftung des Metallic-Basis-Lackes bei Niedrigtemperatur-Härtung auf dem bereits eingebrannten klaren Decklack. Eine beim Zusammenbau fertig lackierter Teile entstandene Schadstelle wird nämlich in der Praxis im allgemeinen kleinflächig mit einem geeigneten Schleifmittel geglättet. Hierbei wird der Decklack entweder ganz entfernt oder aber so aufgerauht, daß der neu aufgebrachte Basis-Lack in aller Regel gut haftet. Um aber optische Kontinuität sicherzustellen, wird die beigeschliffene Schadstelle weiträumig umspritzt, so daß der Basis-Lack auf einer größeren Fläche auf ungeschliffenen Decklack gespritzt wird. Auch diese Partien müssen aber die Anforderungen an Haftung wie die Orginaloberfläche erfüllen. Die Haftung wird in der Praxis mit der Gitterschnittmethode (nach DIN 53 151) ermittelt. Die aus wäßriger Phase zu verarbeitenden Polyurethanlacke des Standes der Technik erfüllen diese Forderung der Praxis nicht oder nur unzureichend.

Es war daher die dar Erfindung zugrundeliegende Aufgabe, ein neues wäßriges Überzugsmittel für die Erzeugung von Metallic-Basis-Lacken zur Verfügung zu stellen, welches den genannten Forderungen der Praxis genügt, d.h. welches weitgehend unabhängig von der Einbrenntemperatur Lackfilme gleicher Qualität liefert, so daß es sowohl als Einbrennlack für die Rohkarosserie von Kraftfahrzeugen als auch als Reparaturlack verwendet werden kann, wobei in beiden Fällen Lackfilme einer guten Beständigkeit gegenüber Schwitzwasser und einer guten Haftung auch auf der Originallackierung resultieren.

Diese Aufgabe konnte überraschenderweise mit der Bereitstellung des nachstehend näher beschriebenen erfindungsgemäßen Überzugsmittels gelöst werden. Die in den erfindungsgemäßen Überzugsmitteln als Bindemittel bzw. Bindemittelkomponente vorliegenden Polyurethan-Polyharnstoffe sind durch einen Mindestgehalt an Carbonatgruppierungen und einen Maximalgehalt an Urethan- und Harnstoffgruppierungen gekennzeichnet. Die Kombination dieser Eigenschaften führt überraschenderweise zu den angestrebten Verbesserungen der lacktechnischen Eigenschaften.

Gegenstand der Erfindung ist ein wäßriges Überzugsmittel mit einem Festkörperanteil von 10 bis 40 Gew.-%, welches ein in Wasser dispergierbares Bindemittel, Aluminiumpigmente, gegebenenfalls Vernetzerharze in einer Menge von bis zu 50 Gew.-%, bezogen auf den Festkörper des vernetzerfreien Bindemittels, sowie gegebenenfalls weitere Hilfs- und Zusatzmittel enthält, wobei das Bindemittel aus einem in Wasser dispergierbaren Polyurethanpolyharnstoff und gegebenenfalls zusätzlich bis zu 40 Gew.-%, bezogen auf das Gesamtgewicht des Bindemittels aus einem oder mehreren anderen in Wasser dispergierbaren Polymeren besteht, dadurch gekennzeichnet, daß der Polyurethanpolyharnstoff

(i) mindestens 200 Milliäquivalente pro 100 g Polyurethanpolyharnstoff-Feststoff an chemisch eingebauten Carbonatgruppierungen -O-CO-O- und

(ii) nicht mehr als insgesamt 320 Milliäquivalente pro 100g Polyurethanpolyharnstoff-Feststoff an chemisch eingebauten Urethangruppierungen -NH-CO-O-und chemisch eingebauten Harnstoffgruppierungen -NH-CO-NH-enthält und durch an sich bekannte Umsetzung von

a) organischen Polyisocyanaten des Molekulargewichtsbereichs 112 bis 1000 mit

b) organischen Polyhydroxylverbindungen des Molekulargewichtsbereichs 300 bis 5000, die sich zumindest zu 50 Gew.-% aus Polyhydroxypolycarbonaten dieses Molekulargewichtsbereichs zusammensetzen, mit der Maßgabe, daß gegebenenfalls mitverwendete Polyetherdiole des genannten Molekulargewichtsbereichs maximal 10 Gew.-% an Ethylenoxideinheiten enthalten,

gegebenenfalls

c) mindestens difunktionellen Hydroxyl- und/oder Aminogruppen aufweisenden Verbindungen eines unter 300 liegenden Molekulargewichts,

unter Mitverwendung von

d) nichtionisch-hydrophilen Aufbaukomponenten, ausgewählt aus der Gruppe bestehend aus d1) Diisocyanaten und/oder im Sinne der Isocyanat-Polyadditionsreaktion difunktionellen Verbindungen mit gegenüber Isocyanatgruppen reaktionsfähigen Wasserstoffatomen mit seitenständigen, Ethylenoxid-Einheiten aufweisenden Polyetherketten und d2) Monoisocyanaten und/oder im Sinne der Isocyanat-Polyadditionsreaktion monofunktionellen Verbindungen mit gegenüber Isocyanatgruppen reaktionsfähigen Wasserstoffatomen mit Ethylenoxid-Einheiten aufweisenden Polyetherketten, in einer solchen Menge, daß in dem Polyurethanpolyharnstoff 0 bis 30 Gew.-% an innerhalb von end- und/oder seitenständig angeordneten Polyetherketten eingebauten Ethylenoxid-Einheiten vorliegen

und/oder unter Mitverwendung von

e) Verbindungen mit mindestens einer NCO-reaktiven und einer (potentiell) ionischen Gruppe unter zumindest teilweiser Quaternierung oder Neutralisation der gegebenenfalls vorliegenden potentiell ionischen Gruppen, so daß in dem letztendlich erhaltenen Polyurethanpolyharnstoff 0 bis 120 Milliäquivalente pro 100 g Polyurethanpolyharnstoff-Feststoff an ionischen Gruppen vorliegen,

hergestellt worden ist.

Gegenstand der Erfindung ist auch die Verwendung von in Wasser dispergierten Polyurethanpolyharnstoffen der zuletzt genannten Art als Bindemittel oder Bindemittelkomponente für wäßrige Metallic-Basis-Lacke.

Die erfindungswesentlichen Polyurethan-Polyharnstoffe werden in an sich bekannter Weise durch Umsetzung von

a) organischen Polyisocyanaten, die keine hydrophilen oder in hydrophile Gruppen überführbare Gruppen aufweisen, mit

b) höhermolekularen organischen Polyhydroxylverbindungen, die außer den Hydroxylgruppen keine hydrophilen oder in hydrophile Gruppen überführbare Gruppen aufweisen, und gegebenenfalls

c) niedermolekularen Verbindungen, die mindestens zwei gegenüber Isocyanatgruppen reaktionsfähige Gruppen, jedoch außer diesen Gruppen keine hydrophilen oder in hydrophile Gruppen überführbare Gruppen aufweisen, unter Mitverwendung von

d) nichtionisch-hydrophilen Aufbaukomponenten, die mindestens eine Isocyanatgruppe oder mindestens eine gegenüber Isocyanatgruppen reaktionsfähige Gruppe aufweisen, und/oder unter Mitverwendung von

e) Aufbaukomponenten, die neben mindestens einer ionischen Gruppe oder mindestens einer in eine ionische Gruppe überführbaren Gruppe mindestens ein gegenüber Isocyanatgruppen reaktionsfähiges Wasserstoffatom aufweisen,

hergestellt.

Bei der Umsetzung der Isocyanatgruppen mit den Hydroxylgruppen entstehen naturgemäß Urethangruppen, während die in den Reaktionsprodukten ebenfalls vorliegenden Harnstoffgruppen auf die Mitverwendung von aminischen Aufbaukomponenten und/oder auf die bei der Herstellung von wäßrigen Polyurethandispersionen nie ganz auszuschließende Reaktion zwischen Isocyanatgruppen und Dispergierwasser zurückzuführen sind. Erfindungswesentlich ist, das Art und Mengenverhältnisse der genannten Ausgangsmaterialien so gewählt werden, das in den resultierenden Polyurethanpolyharnstoffen mindestens 200 Milliäquivalente, vorzugsweise mindestens 250 Milliäquivalente pro 100 g Feststoff an chemisch eingebauten Carbonatgruppierungen -O-CO-O- und insgesamt höchstens 320 Milliäquivalente, vorzugsweise 200 bis 320 Milliäquivalente und besonders bevorzugt 200 bis 300 Milliäquivalente pro 100 g Feststoff an Urethangruppierungen -NH-CO-O- und Harnstoffgruppierungen -NH-CO-NH- in chemisch eingebauter Form vorliegen.

Als Polyisocyanatkomponente a) eignen sich für das erfindungsgemäße Verfahren beliebige, aus der Polyurethanchemie an sich bekannte Polyisocyanate, die im allgemeinen ein Molekulargewicht von 112 bis 1000, vorzugsweise 140 bis 400 aufweisen. In Betracht kommen beispielsweise Polyisocyanate der allgemeinen Formel $Q(NCO)_n$, wobei Q für einen organischen Rest steht, wie er durch Entfernung der Isocyanatgruppen aus einem organischen Polyisocyanat des Molekulargewichtsbereichs 112 bis 1000, vorzugsweise 140 bis 400, erhalten wird, und n für 2 bis 4, vorzugsweise 2 und 3 steht. Besonders bevorzugte für das erfindungsgemäße Verfahren geeignete Polyisocyanate sind solche der angegebenen allgemeinen Formel, in welcher Q für einen zweiwertigen aliphatischen Kohlenwasserstoffrest mit 4 bis 18 Kohlenstoffatomen oder einen zweiwertigen cycloaliphatischen Kohlenwasserstoffrest mit 5 bis 15 Kohlenstoffatomen, für einen zweiwertigen aromatischen Kohlenwasserstoffrest mit 6 bis 15 Kohlenstoffatomen oder einen araliphatischen Kohlenwasserstoffrest mit 7 bis 15 Kohlenstoffatomen steht. Typische Vertreter sind z.B. Tetramethylendiisocyanat, 1,6-Diisocyanatohexan (HDI), Dodecamethylendiisocyanat, 2,2,4-Trimethylhexandiisocyanat, Undecandiisocyanat-1,11, Lysinesterdiisocyanat, Cyclohexan-1,3- und -1,4-diisocyanat, 1-Isocyanato-3-isocyanatomethyl-3,5,5-trimethylcyclohexan (IPDI), 4,4'-Diisocyanatodicyclohexylmethan und

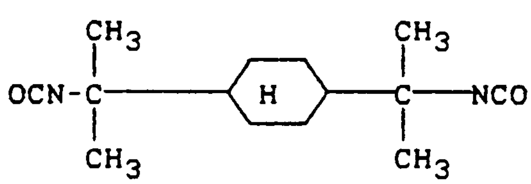

oder auch aromatische Diisocyanate wie 2,4-Diisocyanatotoluol, 2,6-Diisocyanatotoluol, aus diesen Isomeren bestehende Gemische, 4,4'-Diisocyanatodiphenylmethan und 1,4-Diisocyanatoisopropylbenzol. HDI, IPDI und aus diesen Diisocyanaten bestehende Gemische sind besonders bevorzugt.

Die Komponente b) besteht aus organischen Polyhydroxylverbindungen des Molekulargewichtsbereichs 300 bis 5000, vorzugsweise 500 bis 3000, wobei sich die Komponente b) zumindest zu 50 Gew.-%, vorzugsweise zu mehr als 70 Gew.-% aus Polyhydroxypolycarbonaten dieses Molekulargewichtsbereichs zusammensetzt. Unter diesen erfindungswesentlichen Aufbaukomponenten sind Ester der Kohlensäure zu verstehen, die durch Reaktion von Kohlesäurederivaten, z.B. Diphenylcarbonat oder Phosgen, mit Diolen erhalten wurden. Als derartige Diole kommen z.B. Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, ferner Diethylenglykol, Tri- und Tetraethylenglykol, Dipropylenglykol, Polypropylenglykole, Dibutylenglykol, Polybutylenglykole, Bisphenol A, Tetrabrombisphenol A in Frage. Vorzugsweise enthält die Diolkomponente 40 bis 100 Gew.-% Hexandiol, vorzugsweise Hexandiol-1,6, und/oder Hexandiol-Derivate, vorzugsweise solche, die neben endständigen OH-Gruppen Ether- oder Estergruppen aufweisen, z.B. Produkte, die durch Umsetzung von 1 Mol Hexandiol mit ≧1 Mol, bevorzugt 1 bis 2 Mol Caprolacton gemäß DE-AS 17 70 245, oder durch Veretherung von Hexandiol mit sich selbst zum Di- oder Trihexylenglykol erhalten wurden. Die Herstellung solcher Derivate ist z.B. aus DE-AS 1 570 540 bekannt. Auch die in DE-OS 37 17 060 beschriebenen Polyether-Polycarbonatdiole können sehr gut eingesetzt werden.

Die Hydroxylpolycarbonate sollen im wesentlichen linear sein. Sie können jedoch gewünschtenfalls durch den Einbau polyfunktioneller Komponenten, insbesondere niedermolekularer Polyole, leicht verzweigt werden. Hierzu eignen sich beispielsweise Glycerin, Trimethylolpropan, Hexantriol-1,2,6, Butantriol-1,2,4, Trimethylolpropan, Pentaerythrit, Chinit, Mannit und Sorbit, Methylglykosid, 1,4,3,6-Dianhydrohexite.

Neben diesen Polyhydroxypolycarbonaten kann die Aufbaukomponente b) auch andere, aus der Polyurethanchemie an sich bekannte, Polyhydroxylverbindungen des genannten Molekulargewichtsbereichs enthalten wie z.B.

1. die in der Polyurethanchemie an sich bekannten Dihydroxypolyester aus Dicarbonsäuren, z.B. Bernsteinsäure, Adipinsäure, Korksäure, Azelainsäure, Sebacinsäure, Phthalsäure, Isophthalsäure, Terephthalsäure, Tetrahydrophthalsäure usw. und Diolen, wie z.B. Ethylenglykol, Propandiol-1,2, Propandiol-1,3, Diethylenglykol, Butandiol-1,4, Hexandiol-1,6, Octandiol-1,8, Neopentylglykol, 2-Methylpropandiol-1,3, oder die verschiedenen isomeren Bishydroxymethylcyclohexane;
2. die in der Polyurethanchemie an sich bekannten Polylactone, wie z.B. die auf den obengenannten zweiwertigen Alkoholen gestarteten Polymerisate des $\epsilon$-Caprolactons;
3. die in der Polyurethanchemie an sich bekannten Polyether, wie z.B. die unter Verwendung von zweiwertigen Startermolekülen, wie Wasser, den obengenannten Diolen oder 2 NH-Bindungen aufweisenden Aminen hergestellten Polymerisate bzw. Mischpolymerisate des Tetrahydrofurans, Styroloxids, Propylenoxids, Ethylenoxids, der Butylenoxide oder des Epichlorhydrins, insbesondere des Propylenoxids und gegebenenfalls Ethylenoxids. Ethylenoxid wird gegebenenfalls anteilmäßig mitverwendet, jedoch mit der Maßgabe, daß das resultierende Polyetherdiol maximal 10 Gew.-% an Ethylenoxideinheiten enthält.

Vorzugsweise werden solche Polyetherdiole mitverwendet, die ohne Mitverwendung von Ethylenoxid, d.h. insbesondere unter ausschließlicher Verwendung von Propylenoxid und Tetrahydrofuran erhalten wurden.

Bei den gegebenenfalls mitzuverwendenden Aufbaukomponenten c) handelt es sich um die aus der Polyurethanchemie an sich bekannten, niedermolekularen, im Sinne der Isocyanat-Additionsreaktion mindestens difunktionellen Hydroxyl- und/oder Aminogruppen aufweisenden Verbindungen eines unter 300 liegenden Molekulargewichts. Als Aufbaukomponenten c) kommen sowohl im Sinne der Isocyanatadditionsreaktion difunktionelle Verbindungen (Kettenverlängerungsmittel) als auch im Sinne der Isocyanatpolyadditionsreaktion mindestens trifunktionelle Verbindungen (Vernetzer) bzw. beliebige Gemische derartiger Verbindungen in Betracht. Beispiele für geeignete Aufbaukomponenten c) sind niedermolekulare mehrwertige Alkohole wie Ethylenglykol, Propandiol-1,2 und -1,3, Butandiol-1,4 und -1,3, Hexandiol-1,6, Octandiol-1,8, Neopentylglykol, 1,4-Bishydroxymethylcyclohexan, 2-Methyl-1,3-propandiol, 2,2,4-Trimethylpentandiol-1,3, Glycerin, Trimethylolpropan, Trimethylolethan, die isomeren Hexantriole oder Pentaerythrit; niedermolekulare Diamine wie z.B. Ethylendiamin, 1,2-und 1,3-Diaminopropan, 1,3- und 1,4- und 1,6-Diaminohexan, 1,3-Diamino-2,2-dimethylpropan, Isophorondiamin, 4,4'-Diamino-dicyclohexylmethan, 4,4'-Diamino-3,3'-dimethyldicyclohexylmethan, 1,4-Bis-(2-amino-prop-2-yl)-cyclohexan oder auch Hydrazin, Hydrazide bzw. beliebige Gemische derartiger Diamine und Hydrazine; höherfunktionelle Polyamine wie Diethylentriamin, Triethylentetramin, Dipropylentriamin, Tripropylentetramin, hydrierte Anlagerungsprodukte von Acrylnitril an aliphatische oder cycloaliphatische Diamine, vorzugsweise entsprechender Anlagerungsverbindungen einer Acrylnitrilgruppe an ein Molekül eines Diamins, z.B. Hexamethylenpropylentriamin, Tetramethylen-propylen-triamin, Isophoronpropylen-triamin, 1,4- oder 1,3-Cyclohexanpropylentriamin oder beliebige Gemische derartiger Polyamine.

Bei den hydrophilen Aufbaukomponenten d) handelt es sich um innerhalb von Polyetherketten eingebaute Ethylenoxideinheiten aufweisende Verbindungen und zwar um

d1) Diisocyanate und/oder im Sinne der Isocyanatpolyadditionsreaktion difunktionelle Verbindungen mit gegenüber Isocyanatgruppen reaktionsfähigen Wasserstoffatomen mit seitenständigen, Ethylenoxid-Einheiten aufweisenden Polyetherketten,

d2) Monoisocyanate und/oder im Sinne der Isocyanat-Polyadditionsreaktion monofunktionelle Verbindungen mit gegenüber Isocyanatgruppen reaktionsfähigen Wasserstoffatomen mit Ethylenoxideinheiten aufweisenden Polyetherketten oder um Gemische von Verbindungen d1) und d2).

Zu den Aufbaukomponenten d1) gehören insbesondere Verbindungen der allgemeinen Formel (I)

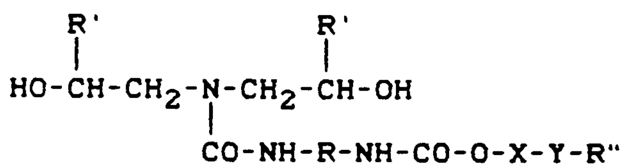

(I)

und/oder Verbindungen der allgemeinen Formel (II)

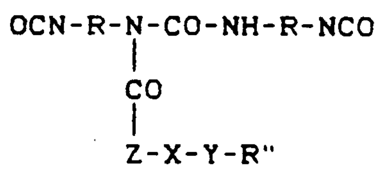

(II)

Zu den Verbindungen d2) gehören insbesondere solche der allgemeinen Formel (III)

HO-X-Y-R"    (III)

der Formel (IV)

HR'N-X-Y-R"    (IV)

und/oder Verbindungen der allgemeinen Formel (V)

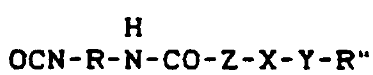

(V)

In diesen Formeln (I) bis (V) stehen

- R für einen zweiwertigen Rest, wie er durch Entfernung der Isocyanatgruppen aus einem Diisocyanat der Formel $R(NCO)_2$ der vorstehend genannten Art erhalten wird (R entspräche dann dem vorstehend genannten Rest Q),
- R′ für Wasserstoff oder einen einwertigen Kohlenwasserstoffrest mit 1 bis 8 Kohlenstoffatomen, vorzugsweise für Wasserstoff oder eine Methylgruppe,
- R″ für einen einwertigen Kohlenwasserstoffrest mit 1 bis 12 Kohlenstoffatomen, vorzugsweise einen unsubstituierten Alkylrest mit 1 bis 4 Kohlenstoffatomen,
- X für den Rest, wie er durch Entfernen des endständigen Sauerstoffatoms aus einer Polyalkylenoxidkette mit 5 bis 90, vorzugsweise 20 bis 70 Kettengliedern erhalten wird, welche Kettenglieder zumindest zu 40 %, vorzugsweise zumindest zu 65 % aus Ethylenoxid-Einheiten bestehen und

die neben Ethylenoxid-Einheiten auch Propylenoxid-, Butylenoxid- oder Styroloxid-Einheiten darstellen können, wobei unter den letztgenannten Einheiten Propylenoxid-Einheiten bevorzugt sind,

Y für Sauerstoff oder $-NR'''-$, wobei $R'''$ bezüglich seiner Definition $R''$ entspricht,

Z für einen Rest, der in seiner Bedeutung der Definition von Y entspricht.

Die Herstellung dieser hydrophilen Aufbaukomponenten (I) bis (V) erfolgt in Analogie zu US-PS 3 920 598, US-PS 3 905 929, US-PS 4 190 566 oder US-PS 4 237 264.

Als Aufbaukomponente e) werden Verbindungen mit mindestens einer NCO-reaktiven und einer (potentiell) ionischen Gruppe eingesetzt. Es handelt sich hierbei beispielsweise um tertiäre Aminogruppen aufweisende Alkohole, Hydroxycarbonsäuren, Hydroxysulfonsäuren, Aminocarbonsäuren oder Aminosulfonsäuren der bereits in US-PS 3 479 310 beispielhaft genannten Art. Anstelle dieser potentiellen Aufbaukomponenten können auch die entsprechenden salzartigen Derivate, d.h. ihre Quaternierungs- bzw. Neutralisationsprodukte eingesetzt werden. Geeignete Quaternierungs- bzw. Neutralisationsmittel zur Überführung der potentiellen ionischen Gruppen in ionische Gruppen sind ebenfalls in US-PS 3 479 310 beispielhaft erwähnt. Im Falle der Verwendung von potentiellen ionischen Aufbaukomponenten erfolgt die zumindest teilweise Überführung der potentiellen ionischen Gruppen in ionische Gruppen durch Quaternierung oder Neutralisation im Anschluß oder während der Herstellung der Polyurethanpolyharnstoffe.

Zu den bevorzugten Aufbaukomponenten e) gehören 2,2-Bis(hydroxymethyl)-alkanmonocarbonsäuren mit insgesamt 5 bis 8 Kohlenstoffatomen, d.h. Verbindungen der allgemeinen Formel

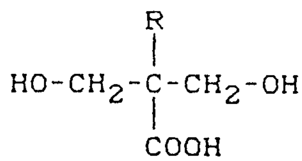

in welcher

R für einen Alkylrest mit 1 bis 4 Kohlenstoffatomen steht,

und/oder deren Salze, erhalten durch teilweise oder vollständige Neutralisation mit organischen Aminen oder $NH_3$.

Besonders bevorzugt wird 2,2-Dimethylolpropionsäure (2,2-Bishydroxymethylpropionsäure) und/oder deren Salze als Aufbaukomponente e) verwendet.

Die Herstellung der Polyurethanpolyharnstoffe aus den Ausgangskomponenten a) bis e) erfolgt in an sich bekannter Weise einoder mehrstufig, wobei die Mengenverhältnisse der Reaktionspartner so gewählt werden, daß das Äquivalentverhältnis von Isocyanatgruppen der Komponente a) und gegebenenfalls der Komponente d) zu gegenüber Isocyanatgruppen reaktionsfähigen Gruppen der Komponenten b), c), e) und gegebenenfalls d) bei 0,8:1 bis 2:1, vorzugsweise 0,95:1 bis 1,5:1 und insbesondere bei 0,95:1 bis 1,2:1 liegt.

Die Komponente d) gelangt in einer solchen Menge zum Einsatz, daß in dem letztendlich erhaltenen erfindungsgemäßen Polyurethanpolyharnstoff 0 bis 30, vorzugsweise 1 bis 20 Gew.-% an innerhalb von end- und/oder seitenständig angeordneten Polyetherketten eingebauten Ethylenoxideinheiten vorliegen.

Die Menge der Komponente e) und der Neutralisations-bzw. Quaternierungsgrad der mit der Komponente e) eingebauten ionischen Gruppen wird so bemessen, daß in dem letztendlich erhaltenen Polyurethanpolyharnstoff 0 bis 120, vorzugsweise 1 bis 80 Milliäquivalente pro 100 g Polyurethanpolyharnstoff-Feststoff an ionischen Gruppen vorliegen, wobei die Gesamtmenge der Ethylenoxideinheiten und der ionischen Gruppen innerhalb der genannten Bereiche so bemessen sein muß, daß die Dispergierbarkeit der Polyurethanpolyharnstoffe in Wasser gewährleistet ist.

Die Umsetzung der Ausgangskomponenten a) bis e) kann sowohl ein- als auch mehrstufig durchgeführt werden, wobei gegebenenfalls ein gegenüber Isocyanatgruppen inertes, mit Wasser mischbares Lösungsmittel mitverwendet wird, so daß die Umsetzungsprodukte letztendlich in Form einer Lösung in einem derartigen Lösungsmittel vorliegen. In diesem Zusammenhang bedeutet "Lösung" sowohl eine echte Lösung als auch eine Wasser-in-Öl-Emulsion, die dann entstehen kann, wenn beispielsweise einzelne der Aufbaukomponenten in Form von wäßrigen Lösungen zum Einsatz gelangen. Geeignete Lösungsmittel sind beispielsweise Aceton, Methylethylketon, N-Methylpyrrolidon oder beliebige Gemische derartiger Lösungsmittel. Die Menge dieser Lösungsmittel wird im allgemeinen so bemessen, daß 10 bis 70 gew.-%ige Lösungen der Umsetzungsprodukte aus den Ausgangskomponenten a) bis e) in dem Lösungsmittel anfallen.

Bei der einstufigen Herstellung der Polyurethanpolyharnstoffe werden vorzugsweise die Ausgangskomponenten mit gegenüber Isocyanatgruppen reaktionsfähigen Gruppen miteinander gemischt und mit den Isocyanatgruppen aufweisenden Ausgangskomponenten zur Reaktion gebracht, wobei vorzugsweise zunächst in Abwesenheit von Lösungsmitteln bei 50 bis 150 °C liegenden Temperaturen gearbeitet wird, und wobei gegebenenfalls an sich bekannte Katalysatoren mitverwendet werden. Hierbei werden Art und Mengenverhältnisse der Ausgangskomponenten vorzugsweise so gewählt, daß ein Äquivalentverhältnis von Isocyanatgruppen zu gegenüber Isocyanatgruppen reaktionsfähigen Gruppen von 0,8:1 bis 1,05:1 vorliegt.

Im Verlauf der Reaktion steigt die Viskosität des Gemischs an, so daß der Mischung nach und nach eines der genannten Lösungsmittel zugegeben wird. Schließlich wird eine organische Lösung des ausreagierten Polyurethanpolyharnstoffs erhalten, deren Konzentration bei ca. 10 bis 70, insbesondere 15 bis 55 Gew.-% Feststoff eingestellt wird.

Bei der Durchführung des Zweistufenverfahrens wird vorzugsweise zunächst in der Schmelze aus überschüssigen Mengen aus Isocyanatgruppen aufweisenden Ausgangskomponenten a) und gegebenenfalls d) und Hydroxylgruppen aufweisenden Ausgangskomponenten b), c), e) und gegebenenfalls d) unter Einhaltung eines NCO/OH-Äquivalentverhältnisses von 1,1:1 bis 3,5:1, vorzugsweise 1,2:1 bis 2,5:1 in Ab- oder Anwesenheit eines Lösungsmittels der beispielhaft genannten Art bei ca. 50 bis 150 °C ein NCO-Prepolymer hergestellt, welches bei Abwesenheit von Lösungsmitteln anschließend in einem Lösungsmittel der beispielhaft genannten Art aufgenommen wird. Die so erhaltene Lösung wird dann mit weiteren Kettenverlängerungs- oder Vernetzungsmitteln c), die gegebenenfalls in Form wäßriger Lösungen eingesetzt werden, zur Umsetzung gebracht, wobei als Komponente c) vorzugsweise primäre und/oder sekundäre Aminogruppen aufweisende Aufbaukomponenten der oben beispielhaft genannten Art verwendet werden. Die Menge der in dieser zweiten Stufe verwendeten Aufbaukomponenten c) wird hierbei so bemessen, daß das Äquivalentverhältnis aller in erster und zweiter Stufe zum Einsatz gelangender Ausgangskomponenten den obengemachten Angaben entspricht.

Bei beiden Varianten (ein- oder zweistufig) resultieren letztendlich Lösungen der Umsetzungsprodukte in dem genannten Lösungsmittel mit einem Feststoffgehalt innerhalb der obengenannten Bereiche.

Die zumindest teilweise Überführung von gegebenenfalls vorliegenden potentiellen ionischen Gruppen in ionische Gruppen durch Quaternierung oder Neutralisation erfolgt zweckmäßigerweise vor der Zugabe des Dispergierwassers. Im Falle der bevorzugten Verwendung von Carboxylgruppen aufweisenden Aufbaukomponenten e), insbesondere von Dimethylolpropionsäure werden bevorzugt tertiäre Amine als Neutralisationsmittel eingesetzt. Derartige tertiäre Amine sind beispielsweise Triethylamin, Tri-n-butylamin, N,N,N-Trimethylcyclohexylamin, N-Methylmorpholin, N-Methylpiperazin, N,N-Dimethylethanolamin, N-Methylpiperidin, Triethanolamin. Ebenfalls bevorzugt ist, unter Einhaltung der in EP-A-269 972 dargelegten Verfahrensbedingungen, die Verwendung von Ammoniak als Neutralisationsmittel für vorab eingebaute Carboxylgruppen.

Im Anschluß an die Zugabe des als Lösungsmittel bzw. als Dispergiermedium dienenden Wassers, dessen Menge im übrigen so bemessen wird, daß 10 bis 60, vorzugsweise 20 bis 45 gew.-%ige Dispersionen resultieren, erfolgt gegebenenfalls eine destillative Entfernung zumindest der Hauptmenge des verwendeten Hilfslösungsmittels.

Die Herstellung der Polyurethanpolyharnstoffe kann auch nach anderen Varianten gemäß Stand der Technik erfolgen, beispielsweise indem man als Kettenverlängerungsmittel c) Hydrazin oder Diamine in blockierter Form, d.h. in Form der entsprechenden Azine bzw. Ketimine verwendet, wie dies in US-PS 4 269 748 bzw. US-PS 4 829 122 gelehrt wird.

Weiterhin ist es möglich, das sogenannte Prepolymer-Misch-Verfahren anzuwenden (vgl. D. Dieterich, Angew. Makromol. Chem. 98, 142 (1981)), indem zunächst in der oben beschriebenen Weise ein NCO-Prepolymer hergestellt wird und dieses nach zumindest teilweiser Überführung von gegebenenfalls vorliegenden potentiellen ionischen Gruppen in ionische Gruppen mit Wasser zu einer Emulsion vermischt wird. Die NCO-Gruppen des Prepolymeren werden danach in der wäßrigen Phase zur Reaktion gebracht, was durch Zusatz von aminischen Kettenverlängerungs- oder Vernetzungsmitteln c) und/oder durch Reaktion mit dem Wasser bewerkstelligt wird.

In den erfindungsgemäßen Überzugsmitteln liegen als Bindemittel die so hergestellten und in Wasser dispergierten Polyurethanpolyharnstoffe oder Gemische dieser erfindungswesentlichen Polyurethanpolyharnstoffe mit anderen Bindemitteln vor. Falls derartige Gemische von unterschiedlichen Bindemittelkomponenten zum Einsatz gelangen beträgt der Anteil der erfindungswesentlichen Polyurethanpolyharnstoffe mindestens 60 Gew.-%, bezogen auf das Gesamtgewicht der zum Einsatz gelangenden Bindemittel. Andere, gegebenenfalls neben den erfindungswesentlichen Polyurethanpolyharnstoffen zu verwendende Bindemittel sind beispielsweise handelsübliche wäßrige Polyacrylat-Dispersionen oder -Lösungen, Polyester-Dispersionen oder -Lösungen und/oder wasserverdünnbare Polyester-Harze.

Die erfindungsgemäßen Überzugsmittel enthalten neben Wasser und dem genannten Bindemittel Aluminiumpigmente der an sich bekannten Art, sowie gegebenenfalls weitere Farbpigmente. Außerdem können in den erfindungsgemäßen Überzugsmitteln die üblichen Vernetzer sowie außerdem noch andere, in der Lacktechnologie übliche Hilfs- und Zusatzmittel vorliegen.

Geeignete Aluminiumpigmente sind beispielsweise Zubereitungen (Aluminiumpasten) wie sie speziell für wäßrige Metallic-Basislacke im Handel sind, z.B. unter den Handelsnamen ®Alpate WX (Toyo Aluminium K.K.) oder ®Stapa Hydrolac (Eckart-Werke).

Als gegebenenfalls weiterhin mitzuverwendende sonstige Farbpigmente kommen grundsätzlich alle zur Formulierung von farbigen Metalleffektlacken bekannten anorganischen und organischen Pigmente in Betracht.

Bei den gegebenenfalls mitzuverwendenden Vernetzern handelt es sich beispielsweise um an sich bekannte partiell oder vollständig veretherte wassermischbare Melamin-Formaldehyd-Kondensationsprodukte oder um an sich bekannte blockierte Polyisocyanate.

Diese Vernetzerharze können in den Überzugsmitteln in Festkörper-Mengen von bis zu 50, vorzugsweise bis zu 30 Gew.-%, bezogen auf den Festkörper des vernetzerfreien Bindemittels vorliegen.

Weitere, gegebenenfalls mitzuverwendende Hilfs- und Zusatzstoffe sind z.B. handelsübliche organische oder anorganische Verdickungsmittel wie z.B. Carboxylgruppenhaltige Polyacrylate, Polyurethane oder spezielle Schichtsilikate und/oder geeignete Netzmittel und Entschäumer.

Die Vereinigung der beispielhaft genannten Hilfs- und Zusatzmittel mit den wäßrigen Bindemitteldispersionen kann vor, während oder im Anschluß an den Dispergierschritt erfolgen.

Die erfindungsgemäßen Überzugsmittel weisen einen Festkörperanteil von 10 bis 40 Gew.-%, vorzugsweise von 15 bis 25 Gew.-% auf. Die in den Überzugsmitteln dispergiert vorliegenden erfindungsgemäßen Bindemittel liegen in Form von dispergierten Teilchen mit mittleren Teilchendurchmessern von ca. 10 bis 1000 nm, vorzugsweise 30 bis 500 nm vor.

Die erfindungsgemäßen Überzugsmittel eignen sich in hervorragender Weise zur Erzeugung von Metallic-Basisschichten in Mehrschicht-Lackaufbauten. Als Decklacke können beliebige lösungsmittelhaltige oder wäßrige Klarlacke, wie z.B. handelsübliche 2-Komponenten-Polyurethanlacke oder hitzehärtbare 1-Komponentenlacke auf Basis von Polyacrylaten und/oder Polyestern und Melaminharzen verwendet werden. Es können grundsätzlich beliebige Substrate beschichtet werden, wie z.B. Metalle, Kunststoffe, Holz, Glas oder keramische Materialien. Besonders gut geeignet sind die erfindungsgemäßen Überzugsmittel zur Erzeugung von Metalleffekt-Lacken auf den üblicherweise zur Herstellung von Fahrzeugkarosserien oder -teilen verwendeten Werkstoffen, also auf gegebenenfalls grundierten Stahlblechen oder Kunststoffen.

In den nachfolgenden Beispielen beziehen sich alle Angaben in "Teilen" und alle Prozentangaben, soweit nicht anders vermerkt, auf das Gewicht.

## Beispiele

In den nachfolgenden Beispielen werden folgende Dispersionen verwendet:

### Polyurethanpolyharnstoff-Dispersion A (erfindungsgemäß)

Aus 850 Teilen eines Polycarbonats aus Hexandiol-1,6 (hergestellt durch die Reaktion von Hexandiol-1,6 und Diphenylcarbonat; Hydroxylzahl: 56, Molekulargewicht: ca. 2000), 67,5 Teilen eines monofunktionellen Polyetheralkohols der OH-Zahl 26, hergestellt durch Alkoxylierung von n-Butanol unter Verwendung eines Gemisches aus 83 % Ethylenoxid und 17 % Propylenoxid, 40,2 Teilen 2,2′-Bishydroxymethylpropionsäure (DMPS) und 23,4 Teilen Butandiol-1,4 wird durch Umsetzung bei 100 °C mit einem Gemisch aus 151,2 Teilen 1,6-Diisocyanatohexan (HDI) und 199,8 Teilen 3-Isocyanatomethyl-3,5,5-trimethylcyclohexylisocyanat (IPDI) ein Prepolymer gebildet, welches einen Gehalt an freien Isocyanatgruppen von etwa 5 % aufweist. Das Prepolymer wird in 2440 Teilen Aceton aufgelöst; die Lösung wird auf 50 °C abgekühlt.

Aus 19,8 Teilen Ethylendiamin und 7,5 Teilen Hydrazinhydrat wird eine Lösung in 500 Teilen Wasser zubereitet. Diese Lösung wird langsam unter gutem Rühren zu der Prepolymerlösung gegeben; dabei entsteht eine dünnflüssige, weißlich-trübe Lösung. Nun werden 17,8 Teile N,N-Dimethylethanolamin zugesetzt. Unter starkem Rühren werden jetzt 1525 Teile entionisiertes Wasser zugegeben, dabei bildet sich eine opake blau-weiße Dispersion des Festkörpers. Durch Destillation im Vakuum wird aus dieser Dispersion das Aceton entfernt; zurück bleibt eine rein wäßrige Dispersion, die 40 % Feststoff enthält.

Der Festkörper der Dispersion enthält (mEq-% = Milliäquivalentprozent pro 100 g Feststoff)
409 mEq-% Carbonatgruppen (-O-CO-O-)
147 mEq-% Urethangruppen (-NH-CO-O-)

94 mEq-% Harnstoffgruppen (-NH-CO-NH-)
241 mEq-% Urethan- und Harnstoffgruppen

Polyurethanpolyharnstoff-Dispersion B (erfindungsgemäß)

Nach der Verfahrensweise der Dispersion A wird aus den nachfolgenden Materialien eine wäßrige Dispersion hergestellt:
540 Teile Hydroxylpolycarbonat (wie Dispersion A)
45 Teile n-Butanol-gestarteter Polyether (wie Dispersion A)
40,2 Teile DMPS
37,8 Teile Butandiol-1,4
151,2 Teile HDI
199,8 Teile IPDI
7,5 Teile Hydrazinhydrat
19,8 Teile Ethylendiamin
17,8 Teile N,N-Dimethylethanolamin
Die entstandene Dispersion enthält 35 % Feststoff.
Der Feststoff enthält:
339 mEq-% Carbonatgruppen (-O-CO-O-)
192 mEq-% Urethangruppen (-NH-CO-O-)
123 mEq-% Harnstoffgruppen (-NH-CO-NH-)
315 mEq-% Urethan- und Harnstoffgruppen

Polyurethanpolyharnstoff-Dispersion C (erfindungsgemäß)

Nach der Verfahrensweiae der Dispersion A wird aus den nachfolgenden Materialien eine wäßrige Dispersion hergestellt:
850 Teile Hydroxylpolycarbonat (wie Dispersion A)
67,5 Teile n-Butanol-gestarteter Polyether (wie Dispersion A)
21,4 Teile DMPS
22,5 Teile Butandiol-1,4
13,4 Teile Trimethylolpropan
151,2 Teile HDI
199,8 Teile IPDI
7,5 Teile Hydrazinhydrat
19,8 Teile Ethylendiamin
13,4 Teile N,N-Dimethylethanolamin
Die entstandene Dispersion enthält 35 % Feststoff.
Der Feststoff enthält:
410 mEq-% Carbonatgruppen (-O-CO-O-)
148 mEq-% Urethangruppen (-NH-CO-O-)
95 mEq-% Harnstoffgruppen (-NH-CO-NH-)
243 mEq-% Urethan- und Harnstoffgruppen

Polyurethanpolyharnstoff-Dispersion D (erfindungsgemäß)

Es wird verfahren wie bei Dispersion A, mit dem Unterschied, das anstelle des dort eingesetzten Polycarbonatdiols ein Polycarbonatpolyesterdiol der OH-Zahl 56 verwendet wird, das gemäß DE-AS 1 770 245 durch Reaktion von Diphenylcarbonat mit einem Reaktionsprodukt aus 1 Mol Hexandiol und 1 Mol ϵ-Caprolacton hergestellt wurde. Die so erhaltene Dispersion hat einen Festkörpergehalt von 39,5 %.

Der Festkörper enthält:
214 mEq-% Carbonatgruppen (-O-CO-O-)
147 mEq-% Urethangruppen (-NH-CO-O-)
94 mEq-% Harnstoffgruppen (-NH-CO-NH-)
241 mEq-% Urethan- und Harnstoffgruppen

Polyurethanpolyharnstoff-Dispersion E (erfindungsgemäß)

Es wird verfahren wie bei Dispersion A, mit dem Unterschied, das nur 425 g des Polycarbonatdiols gemäß Dispersion A und zusätzlich 425 g eines Polyesterdiols der OH-Zahl 56 aus Adipinsäure sowie Hexandiol und Neopentylglykol (Molverhältnis 65:35) eingesetzt werden.

Die so erhaltene Dispersion hat einen Festkörpergehalt von 40,5 %.

Der Festkörper enthält:
204 mEq-% Carbonatgruppen (-O-CO-O-)
147 mEq-% Urethangruppen (-O-CO-NH-)
94 mEq-% Harnstoffgruppen (-NH-CO-NH-)
241 mEq-% Urethan- und Harnstoffgruppen

Polyurethanpolyharnstoff-Dispersion F

(Vergleichsbeispiel)

Nach der Verfahrensweise der Dispersion A wird aus den nachfolgenden Materialien eine wäßrige Dispersion hergestellt:
380 Teile Hydroxylpolycarbonat (wie Dispersion A)
45 Teile n-Butanol-gestarteter Polyether (wie Dispersion A)
53,6 Teile DMPS
184,8 Teile HDI
244,2 Teile IPDI
63 Teile Butandiol-1,4
42 Teile Ethylendiamin
5,0 Teile Hydrazinhydrat
17,8 Teile N,N-Dimethylethanolamin
Die entstandene Dispersion enthält 38,9 % Festkörper.
Der Festkörper enthält:
244 mEq-% Carbonatgruppen (-O-CO-O-)
255 mEq-% Urethangruppen (-NH-CO-O-)
167 mEq-% Harnstoffgruppen (-NH-CO-NH-)
422 mEq-% Urethan- und Harnstoffgruppen

Polyurethanpolyharnstoff-Dispersion G

(Vergleichsbeispiel)

Nach der Verfahrensweise der Dispersion A wird aus den nachfolgenden Materialien eine wäßrige Dispersion hergestellt:
153 Teile eines Polyesters aus Adipinsäure sowie Hexandiol und Neopentylglykol (Molverhältnis 65:35) mit einer Hydroxylzahl von 66
231 Teile eines Hexandiolpolyadipats, Hydroxylzahl: 134
45 Teile n-Butanol-gestarteter Polyether (wie Dispersion A)
53,6 Teile DMPS
488,4 Teile IPDI
13,4 Teile TMP
33,8 Teile Butandiol-1,4
42 Teile Ethylendiamin
7 Teile Hydrazinhydrat
13,8 Teile N,N-Dimethyldiethanolamin
Die entstandene Dispersion enthält 39,6 % Festkörper.

Der Festkörper ist frei von Carbonatgruppen und enthält:
244 mEq-% Urethangruppen (-NH-CO-O-)
163 mEq-% Harnstoffgruppen (-NH-CO-NH-)
407 mEq-% Urethan- und Harnstoffgruppen

Polyurethanpolyharnstoff-Dispersion H

(Vergleichsbeispiel)

Nach der Verfahrensweise der Dispersion A wird aus den nachfolgenden Materialien eine wäßrige Dispersion hergestellt:
850 Teile eines Polyesters aus Adipinsäure sowie Hexandiol und Neopentylglykol (Molverhältnis 65:35) mit einer Hydroxylzahl von 56
67,5 Teile n-Butanol-gestarteter Polyether (wie Dispersion A)
40,2 Teile DMPS
151,2 Teile HDI
199,8 Teile IPDI
23,4 Teile Butandiol-1,4
19,8 Teile Ethylendiamin
7,5 Teile Hydrazinhydrat
17,8 Teile N,N-Dimethyldiethanolamin
Die entstandene Dispersion enthält 40,2 % Festkörper.

Der Festkörper ist frei von Carbonatgruppen und enthält:
147 mEq-% Urethangruppen (-NH-CO-O-)
94 mEq-% Harnstoffgruppen (-NH-CO-NH-)
241 mEq-% Urethan- und Harnstoffgruppen

Polyurethanpolyharnstoff-Dispersion I

(Vergleichsbeispiel im Hinblick auf DE-OS 32 10 051)

Gemäß der Herstellungsvorschrift "Polyurethandispersion 1" in DE-OS 32 10 051 wird eine 35 %ige Dispersion aus dem dort angegebenen Polyesterdiol, 4,4'-Dicyclohexylmethandiisocyanat, Dimethylolpropionsäure, Triethylamin, N-Methylpyrrolidon, Wasser und Ethylendiamin hergestellt.

Der Festkörper ist frei von Carbonatgruppen und enthält:
208 mEq-% Urethangruppen (-NH-CO-O-)
62 mEq-% Harnstoffgruppen (-NH-CO-NH-)
270 mEq-% Urethan- und Harnstoffgruppen

Polyurethanpolyharnstoff-Dispersion K

(Vergleichsbeispiel im Hinblick auf DE-OS 32 10 051)

Gemäß der Herstellungsvorschrift "Polyurethandispersion 5" in DE-OS 32 10 051 wird eine 19 %ige Dispersion aus dem dort angegebenen Polyetherdiol aus Tetrahydrofuran, Isophorondiisocyanat, Dimethylolpropionsäure, Triethylamin, N-Methylpyrrolidon, Wasser und Hydrazinhydrat hergestellt.

Der Festkörper ist frei von Carbonatgruppen und enthält;
263 mEq-% Urethangruppen (-O-CO-NH-)
97 mEq-% Harnstoffgruppen (-NH-CO-NH-)
360 mEq-% Urethan- und Harnstoffgruppen

Dispersion L (erfindungsgemäß)

1000 Teile der Polyurethanpolyharnstoff-Dispersion A (Feststoffgehalt: 40 %) werden mit 460 Teilen einer handelsüblichen wäßrigen Polyacrylat-Dispersion (®Joncryl 538 S.C. Johnson & Son Inc.) mit einem Feststoffgehalt von 45 % vermischt.

Beispiele 1 bis 11

Aus den Dispersionen A bis L werden spritzfertige wäßrige Metallic-Basis-Lacke hergestellt. Bestandteile:

32,31 Teile*der Dispersionen A bis L
42,96 Teile*Wasser
8,77 Teile Butylglykol
3,33 Teile N,N-Dimethylethanolamin, 10 %ig in Wasser
3,02 Teile Verdicker ®Viscalex HV 30 (Allied Colloids GmbH, Hamburg)
4,04 Teile Vernetzer ®Cymel 325 (80 %ige Lieferform in Isobutanol) (Dyno-Cyanamid, Düsseldorf)
5,57 Teile Aluminiumpaste ®Alpate WX 7160, 58 % (Toyo Aluminium K.K.)

Die spritzfertigen Zubereitungen haben Festkörpergehalte von ca. 17 % und Spritzviskositäten von ca. 30 sec (DIN-Becher 4 mm-Düse, 23 °C).

Auf zinkphosphatiertem Karosserieblech, in praxisüblicher Weise vorbeschichtet mit Elektrotauchgrundierung und Füller werden folgende Lackaufbauten erzeugt, die die üblichen Bedingungen der Reparaturlackierung an einer Lackierlinie in der Automobilindustrie simulieren sollen.

Lackaufbauten, Typ I:

- Spritzauftrag der Metallic-Basis-Lacke gemäß Beispielen 1 bis 11
- 3 min Vortrocknung bei 80 °C
- Spritzauftrag eines praxisüblichen Zweikomponenten-Polyurethan-Klarlackes*
- 7 min Ablüften bei RT
- 45 min Trocknung bei 80 °C

Lackaufbauten, Typ II:

- Erzeugung von Lackaufbauten wie unter I, jedoch mit abschließendem 20-minütigem Einbrennen bei 140 °C
- Spritzauftrag der Metallic-Basis-Lacke gemäß Beispielen 1 bis 11 auf die ungeschliffenen, gehärteten Lacke
- 3 min Vortrocknung bei 80 °C
- Spritzauftrag eines praxisüblichen Zweikomponenten-Polyurethan-Klarlackes*
- 7 min Ablüften bei RT
- 45 min Trocknung bei 80 °C

* gilt für die Dispersionen mit ca. 40 % Festkörper; bei niedrigerem Festkörper werden die Dispersions- und Wassermengen entsprechend korrigiert, so daß jeweils gebrauchsfertige Überzugsmittel mit einem Festkörpergehalt von 17 % resultieren.

* Der 2K-PUR-Lack besteht aus einem Polyacrylat-Polyol mit einem OH-Gehalt von 4,3 % (bezogen auf Festharz) und einem Isocyanurat-Polyisocyanat auf Basis Hexamethylendiisocyanat mit einem NCO-Gehalt von 22 % (bezogen auf Festharz). Das NCO/OH-Verhältnis ist 1,0.

Die Eigenschaften der einzelnen Lacke sind in der folgenden Tabelle dargestellt:

| Beispiel | 1 | 2 | 3 | 4 | 5 | 6 | 7 | 8 | 9 | 10 | 11 |
|---|---|---|---|---|---|---|---|---|---|---|---|
| zugrundeliegende Dispersion | A | B | C | D | E | F | G | H | J | K | L |
| Lackaufbauten, Typ I | | | | | | | | | | | |
| ME-Wert (Flop)[1] | 357 | 295 | 331 | 312 | 290 | 394 | 336 | 214 | 286 | 295 | 220 |
| Brillanz (D.O.I.)[2] | 70 | 70 | 70 | 70 | 70 | 70 | 70 | 70 | 70 | 70 | 70 |
| Schwitzwasserbeständigkeit[3] | | | | | | | | | | | |
| Brillanz (D.O.I.)[2] | 70 | 65 | 70 | 70 | 65 | 40 | 10 | 60 | 60 | 40 | 65 |
| Filmbeurteilung | o.B. | o.B. | o.B. | o.B. | o.B. | g e r u n z e l t | | | | | o.B. |
| Lackaufbauten, Typ II | | | | | | | | | | | |
| Haftung[4] | Gt0 | Gt0 | Gt0 | Gt0 | Gt0 | Gt5 | Gt5 | Gt3 | Gt4 | Gt5 | Gt0 |

1) Metallic-Effekt-Wert, gemessen mit dem Gonio-Photometer GP 3 der Fa. Zeiss

2) Distinction of Image (100 = hochbrillant, 0 = völlig matt)

3) nach 240 h Klimatest gemäß DIN 50 017

4) Gitterschnittprüfung gemäß DIN 53 151 (Gt 0-5)

**Patentansprüche**

1. Wäßriges Überzugsmittel mit einem Festkörperanteil von 10 bis 40 Gew.-%, welches ein in Wasser dispergierbares Bindemittel, Aluminiumpigmente, gegebenenfalls Vernetzerharze in einer Menge von bis zu 50 Gew.-%, bezogen auf den Festkörper des vernetzerfreien Bindemittels, sowie gegebenenfalls weitere Hilfs- und Zusatzmittel enthält, wobei das Bindemittel aus einem in Wasser dispergierbaren Polyurethanpolyharnstoff und gegebenenfalls zusätzlich bis zu 40 Gew.-%, bezogen auf das Gesamtgewicht des Bindemittels aus einem oder mehreren anderen in Wasser dispergierbaren Polymeren besteht, dadurch gekennzeichnet, daß der Polyurethanpolyharnstoff
   (i) mindestens 200 Milliäquivalente pro 100 g Polyurethanpolyharnstoff-Feststoff an chemisch eingebauten Carbonatgruppierungen -O-CO-O-und
   (ii) nicht mehr als insgesamt 320 Milliäquivalente pro 100 g Polyurethanpolyharnstoff-Feststoff an chemisch eingebauten Urethangruppierungen -NH-CO-O- und chemisch eingebauten Harnstoffgruppierungen -NH-CO-NH- enthält und durch an sich bekannte Umsetzung von
      a) organischen Polyisocyanaten des Molekulargewichtsbereichs 112 bis 1000 mit
      b) organischen Polyhydroxylverbindungen des Molekulargewichtsbereichs 300 bis 5000, die sich zumindest zu 50 Gew.-% aus Polyhydroxypolycarbonaten dieses Molekulargewichtsbereichs zusammensetzen, mit der Maßgabe, daß gegebenenfalls mitverwendete Polyetherdiole des genannten Molekulargewichtsbereichs maximal 10 Gew.-% an Ethylenoxideinheiten enthalten.
      gegebenenfalls
      c) mindestens difunktionellen Hydroxyl- und/oder Aminogruppen aufweisenden Verbindungen eines unter 300 liegenden Molekulargewichts,
      unter Mitverwendung von
      d) nichtionisch-hydrophilen Aufbaukomponenten, ausgewählt aus der Gruppe bestehend aus d1) Diisocyanaten und/oder im Sinne der Isocyanat-Polyadditionsreaktion difunktionellen Verbindungen mit gegenüber Isocyanatgruppen reaktionsfähigen Wasserstoffatomen mit seitenständigen, Ethylenoxid-Einheiten aufweisenden Polyetherketten und d2) Monoisocyanaten und/oder im Sinne der Isocyanat-Polyadditionsreaktion monofunktionellen Verbindungen mit gegenüber Isocyanatgruppen reaktionsfähigen Wasserstoffatomen mit Ethylenoxid-Einheiten aufweisenden Polyetherketten, in einer solchen Menge, daß in dem Polyurethanpolyharnstoff 0 bis 30 Gew.-% an innerhalb von end- und/oder seitenständig angeordneten Polyetherketten eingebauten Ethylenoxid-Einheiten vorliegen
      und/oder unter Mitverwendung von
      e) Verbindungen mit mindestens einer NCO-reaktiven und einer (potentiell) ionischen Gruppe unter zumindest teilweiser Quaternierung oder Neutralisation der gegebenenfalls vorliegenden potentiell ionischen Gruppen, so daß in dem letztendlich erhaltenen Polyurethanpolyharnstoff 0 bis 120 Milliäquivalente pro 100 g Polyurethanpolyharnstoff-Feststoff an ionischen Gruppen vorliegen,
   hergestellt worden ist.

2. Wäßriges Überzugsmittel gemäß Anspruch 1, dadurch gekennzeichnet, daß der Polyurethanpolyharnstoff insgesamt 200 bis 320 Milliäquivalente pro 100 g Polyurethanpolyharnstoff-Feststoff an chemisch eingebauten Urethangruppierungen und chemisch eingebauten Harnstoffgruppierungen enthält.

3. Verwendung von in Wasser dispergierbaren Polyurethanpolyharnstoffen, die
   (i) mindestens 200 Milliäquivalente pro 100 g Polyurethanpolyharnstoff-Feststoff an Carbonatgruppierungen -O-CO-O- in chemisch eingebauter Form und
   (ii) nicht mehr als insgesamt 320 Milliäquivalente pro 100 g Polyurethanpolyharnstoff-Feststoff an chemisch eingebauten Urethangruppierungen -NH-CO-O- und chemisch eingebauten Harnstoffgruppierungen -NH-CO-NH-
   enthalten, als Bindemittel oder Bindemittelkomponente für wäßrige Metallic-Basis-Lacke.

4. Verwendung gemäß Anspruch 3, dadurch gekennzeichnet, daß die Polyurethanpolyharnstoffe insgesamt 200 bis 320 Milliäquivalente pro 100 g Polyurethanpolyharnstoff-Feststoff an chemisch eingebauten Urethangruppierungen und chemisch eingebauten Harnstoffgruppierungen enthalten.

## Claims

1. A water-based coating composition having a solids content of 10 to 40% by weight and containing a water-dispersible binder, aluminium pigments, optionally crosslinking resins in a quantity of up to 50% by weight, based on the solids content of the crosslinker-free binder, and optionally other auxiliaries and additives, the binder consisting of a water-dispersible polyurethane polyurea and optionally of up to 40% by weight, based on the total weight of the binder, of one or more other water-dispersible polymers, characterized in that the polyurethane polyurea contains
   (i) at least 200 milliequivalents per 100 g polyurethanepolyurea solids of chemically incorporated carbonate groups -O-CO-O- and
   (ii) no more than a total of 320 milliequivalents per 100 g polyurethane polyurea solids of chemically incorporated urethane groups -NH-CO-O- and chemically incorporated urea groups -NH-CO-NH-
   and has been produced by the reaction known per se of
   a) organic polyisocyanates having a molecular weight in the range from 112 to 1,000 with
   b) organic polyhydroxyl compounds having a molecular weight in the range from 300 to 5,000, of which at least 50% by weight consists of polyhydroxypolycarbonates in this molecular weight range, with the proviso that any polyether diols used in the molecular weight range mentioned contain at most 10% by weight of ethylene oxide units,
   and optionally
   c) at least difunctional compounds containing hydroxyl and/or amino groups with a molecular weight below 300
   using
   d) nonionic-hydrophilic synthesis components selected from the group consisting of dl) diisocyanates and/or compounds with a functionality of two in the isocyanate polyaddition reaction and containing isocyanate-reactive hydrogen atoms with polyether side chains containing ethylene oxide units and d2) monoisocyanates and/or compounds with a functionality of one in the isocyanate polyaddition reaction and containing isocyanate-reactive hydrogen atoms with polyether chains containing ethylene oxide units in such a quantity that 0 to 30% by weight of ethylene oxide units incorporated in terminally and/or laterally positioned polyether chains are present in the polyurethane polyurea
   and/or using
   e) compounds containing at least one NCO-reactive and one (potentially) ionic group with at least partial quaternization or neutralization of any potentially ionic groups present, so that 0 to 120 milliequivalents per 100 g polyurethane polyurea solids are present in the polyurethane polyurea ultimately obtained.

2. A water-based coating composition as claimed in claim 1, characterized in that the polyurethane polyurea contains a total of 200 to 320 milliequivalents per 100 g polyurethane polyurea solids of chemically incorporated urethane groups and chemically incorporated urea groups.

3. The use of water-dispersible polyurethane polyureas containing
   (i) at least 200 milliequivalents per 100 g polyurethane-polyurea solids of chemically incorporated carbonate groups -O-CO-O- and
   (ii) no more than a total of 320 milliequivalents per 100 g polyurethane polyurea solids of chemically incorporated urethane groups -NH-CO-O- and chemically incorporated urea groups -NH-CO-NH-
   as binders or a binder component for water-containing metallic base lacquers.

4. The use claimed in claim 3, characterized in that the polyurethane polyureas contain a total of 200 to 320 milliequivalents per 100 g polyurethane polyurea solids of chemically incorporated urethane groups and chemically incorporated urea groups.

## Revendications

1. Agent d'enduction aqueux possédant une fraction de produit solide de 10 à 40% en poids, qui contient un liant apte à être dispersé dans l'eau, des pigments d'aluminium, éventuellement des résines de réticulation en une quantité allant jusqu'à 50% en poids rapportée au produit solide du liant exempt d'agent de réticulation, ainsi qu'éventuellement d'autres adjuvants et additifs, le liant étant constitué par une polyuréthanne-polyurée apte à être dispersée dans l'eau, et éventuellement en outre par un ou

plusieurs autres polymères aptes à être dispersés dans l'eau jusqu'à concurrence de 40% en poids rapportés au poids total du liant, caractérisé en ce que la polyuréthanne-polyurée contient

(i) au moins 200 milliéquivalents, par 100 grammes de substance solide de polyuréthanne-polyurée, de groupements carbonate -O-CO-O- incorporés par voie chimique, et

(ii) pas plus d'un total de 320 milliéquivalents, par 100 g de substance solide de polyuréthanne-polyurée, de groupements uréthanne -NH-CO-O- incorporés par voie chimique et de groupements urée-NH-CO-NH- incorporés par voie chimique, et est préparée par mise en réaction connue de

a) polyisocyanates organiques du domaine de poids moléculaire de 112 à 1000 avec

b) des composés polyhydroxylés organiques du domaine de poids moléculaire de 300 à 5000, qui sont composés, au moins à concurrence de 50% en poids, de polyhydroxypolycarbonates de ce domaine de poids moléculaire, avec cette mesure que des polyétherdiols éventuellement utilisés de manière conjointe, du domaine de poids moléculaire mentionné, contiennent au maximum 10% en poids d'unités d'oxyde d'éthylène,

éventuellement

c) des composés présentant des groupes hydroxyle et/ou amino au moins difonctionnels d'un poids moléculaire inférieur à 300,

avec utilisation conjointe

d) de constituants non ioniques-hydrophiles choisis parmi le groupe constitué par d1) des diisocyanates et/ou des composés difonctionnels dans le sens de la réaction de polyaddition d'isocyanates contenant des atomes d'hydrogène aptes à réagir vis-à-vis de groupes isocyanate à chaînes latérales polyéthers présentant des unités d'oxyde d'éthylène et d2) des monoisocyanates et/ou des composés monofonctionnels dans le sens de la réaction de polyaddition d'isocyanates possédant des atomes d'hydrogène aptes à réagir vis-à-vis de groupes isocyanate à chaînes polyéthers présentant des unités d'oxyde d'éthylène, dans une quantité telle que, dans la polyuréthanne-polyurée, sont présentes de 0 à 30% en poids d'unités d'oxyde d'éthylène incorporées à l'intérieur de chaînes polyéthers à disposition terminale et/ou latérale,

et/ou avec utilisation conjointe

e) de composés contenant au moins un groupe NCO-réactif et un groupe ionique (potentiel) avec quaternisation ou neutralisation au moins partielle des groupes ioniques potentiels éventuellement présents, si bien que, dans la polyuréthanne-polyurée obtenue en définitive, sont présents de 0 à 120 milliéquivalents de groupes ioniques par 100 g de substance solide de polyuréthanne-polyurée.

**2.** Agent d'enduction aqueux selon la revendication 1, caractérisé en ce que la polyuréthanne-polyurée contient au total de 200 à 320 milliéquivalents, par 100 g de substance solide de polyuréthanne-polyurée, de groupements uréthanne incorporés par voie chimique et de groupements urée incorporés par voie chimique.

**3.** Utilisation de polyuréthanne-polyurées aptes à être dispersées dans l'eau, qui contiennent

(i) au moins 200 milliéquivalents, par 100 grammes de substance solide de polyuréthanne-polyurée, de groupements carbonate -O-CO-O- incorporés par voie chimique, et

(ii) pas plus d'un total de 320 milliéquivalents, par 100 g de substance solide de polyuréthanne-polyurée, de groupements uréthanne -NH-CO-O- incorporés par voie chimique et de groupements urée -NH-CO-NH-,

comme liants ou comme composants de liants pour des peintures métallisées aqueuses de base.

**4.** Utilisation selon la revendication 3, caractérisée en ce que les polyuréthanne-polyurées contiennent, au total, de 200 à 320 milliéquivalents, par 100 g de substance solide de polyuréthanne-polyurée, de groupements uréthanne incorporés par voie chimique et de groupements urée incorporés par voie chimique.